# EUROPEAN PATENT SPECIFICATION

(11) **EP 3 470 501 B1**
(45) Date of publication and mention of the grant of the patent: **10.11.2021**
(21) Application number: 18204100.4
(22) Date of filing: 28.03.2013
(51) Int. Cl.: C10M 169/04, C09K 5/04, C10M 105/18, C10M 105/38, C10M 107/24, C10M 107/34, C10N 30/00, C10N 30/06, C10N 30/08, C10N 30/10, C10N 40/30

(54) **WORKING FLUID COMPOSITION FOR REFRIGERATOR**
ARBEITSFLÜSSIGKEITSZUSAMMENSETZUNG FÜR EINEN KÜHLSCHRANK
COMPOSITION DE FLUIDE DE TRAVAIL POUR RÉFRIGÉRATEUR

(30) Priority: 29.03.2012 JP 2012076298
(43) Date of publication of application: 17.04.2019
(62) Divisional of application: 13767593.0
(73) Proprietor: JX Nippon Oil & Energy Corporation, Chiyoda-ku Tokyo 100-8162 (JP)
(72) Inventor: SAITO, Masanori, Chiyoda-ku, Tokyo 100-8162 (JP); SAWADA, Ken, Chiyoda-ku, Tokyo 100-8162 (JP); SHIMPO, Hiroko, Chiyoda-ku, Tokyo 100-8162 (JP); ADEGAWA, Kuniko, Chiyoda-ku, Tokyo 100-8162 (JP)
(74) Representative: Grünecker Patent- und Rechtsanwälte PartG mbB

(56) References cited:
- WO-A1-2011/163117
- JP-A- 2009 126 979
- US-A1- 2004 089 839

## Description

### Technical Field

The present invention relates to a working fluid composition for a refrigerating machine, and more specifically relates to a working fluid composition for a refrigerating machine that contains a mixed refrigerant which contains a hydrofluoroethane, difluoromethane (also referred to as "HFC-32" or "R32") and tetrafluoropropene.

### Background Art

CFC (chlorofluorocarbon) and HCFC (hydrochlorofluorocarbon), which have been conventionally used as refrigerants for refrigeration equipment, have been subject to regulation due to the problem of recent ozone depletion, and HFC (hydrofluorocarbon) has come to be used as a refrigerant instead of them.

Among HFC refrigerants, HFC-134a, R407C, and R410A are normally used as refrigerants for car air-conditioners, cold storage chambers, or room air-conditioners. Although the ozone depletion potential (ODP) of these HFC refrigerant is zero, these come to be subject to regulation, because the global warming potential (GWP) thereof is high. While difluoromethane has been studied as one of alternate candidates of these refrigerants, difluoromethane has the following problems: the global warming potential thereof is not sufficiently low; the boiling point thereof is so low that thermodynamic characteristics cannot be applied to a current refrigeration system directly; and difluoromethane is not easily compatible with lubricating oils (refrigerating machine oils) used for conventional HFC refrigerants, such as polyol esters and polyvinyl ethers. On the other hand, unsaturated hydrofluorocarbons have been proposed to be used as a refrigerant due to the following reasons; both of its ODP and GWP are very low; unsaturated hydrofluorocarbons are non-flammable depending on structures; and in particular with respect to HFO-1234yf, thermodynamic characteristics as measures of refrigerant performances are comparable with or better than those of HFC-134a (Patent Literatures 1 to 3).
Patent Literature 4 discloses a heat transfer composition comprising difluoromethane, pentafluoroethane, 1,1,1 ,2-tetrafluoroethane, and 2, 3 ,3 ,3 ―tetrafluoropropene.
Patent Literature 5 relates to a working fluid composition for a refrigerator including 1,2,3,3,3-pentafluoropropene (HFC-1225ye), 1,3,3,3-tetrafluoropropene (HFC-) as a fluoropropene refrigerant. Patent Literature 6 relates to a liquid composition for use in compression refrigeration, air-conditioning and heat pump systems comprising (A) a fluoroalkene containing from 3 to 4 carbon atoms and at least 1 but no more than 2 double bonds; and (B) an effective amount to provide lubrication of an essentially miscible organic lubricant comprised of carbon, hydrogen and oxygen and having a ratio of oxygen to carbon effective to provide a degree of miscibility with said fluoroalkene so that when up to five weight percent of lubricant is added to said fluoroalkene the mixture has one liquid phase at at least one temperature between ―40 and +70° C.

### Citation List

### Patent Literature

[Patent Literature 1] International Publication WO2004/037913
[Patent Literature 2] International Publication WO2005/105947
[Patent Literature 3] International Publication WO2009/057475
[Patent Literature 4] International Publication WO2011/163117 A
[Patent Literature 5] JP 2009/126979 A
[Patent Literature 6] US 2004/089839 A1

### Summary of Invention

### Technical Problem

In the case where a refrigerant and a refrigerating machine oil are applied to a refrigeration system, it is demanded for the refrigerant that the refrigerant does not have any adverse influences on the environment and that thermodynamics characteristics are adapted to the refrigeration system. In addition, in a circumstance of coexistence of the refrigerant and the refrigerating machine oil it is demanded that they are soluble in each other (compatibility) and are excellent in thermal/chemical stability, and that an oil film is maintained in order to suppress wear of a sliding member (lubricity).

With respect to a refrigeration system using unsaturated hydrofluorocarbons, it has been considered that since refrigerating machine oils used in HFC, such as polyol esters and polyvinyl ethers, exhibit compatibility with unsaturated hydrofluorocarbons, these refrigerating machine oil can be applied. According to the studies by the present inventors, however, the following problem has been revealed: unsaturated hydrofluorocarbons have unstable double bonds in their molecules and thus are poor in thermal/chemical stability.

In addition, one reason why the compatibility between the refrigerant and the refrigerating machine oil (hereinafter, sometimes simply referred to as "compatibility".) is demanded is because a refrigerating machine oil for lubricating a refrigerant compressor circulates together with a refrigerant in the refrigerant circulation cycle of refrigeration equipment. That is, in the refrigeration equipment, sufficient compatibility between the refrigerant and the refrigerating machine oil is not achieved depending on the selection of the refrigerating machine oil used to the refrigerant, and the refrigerating machine oil discharged from the refrigerant compressor easily remains in the cycle. As a result, there occur problems of wear due to lubrication failure by the reduction in amount of the oil in the refrigerant compressor and of blockage of an expansion mechanism such as a capillary. Therefore, it is important to select the refrigerating machine oil adapted to the refrigerant. In a refrigeration system using difluoromethane, however, a problem is that difluoromethane is not easily compatible with the refrigerating machine oil, and there is also the problem of thermodynamics characteristics.

The present invention has been made in view of such problems, and an object thereof is to provide a working fluid composition for a refrigerating machine that can achieve compatibility and thermal/chemical stability in a refrigeration system using a refrigerant which contains a hydrofluoroethane, difluoromethane and an unsaturated hydrofluorocarbon without requiring for a significant modification of an existing system.

### Solution to Problem

The present inventors have made intensive studies in order to achieve the above object, and as a result, have found that by using a refrigerant containing a specific hydrofluoroethane, difluoromethane and a specific unsaturated hydrofluorocarbon, and a refrigerating machine oil of a specific ester or ether as a base oil, both of sufficiently high compatibility and thermal/chemical stability can be achieved at high levels, leading to the completion of the present invention.

That is, the present invention provides a working fluid composition for a refrigerating machine, comprising:
a refrigerant comprising a hydrofluoroethane represented by the following formula (A), difluoromethane and tetrafluoropropene; and
a refrigerating machine oil comprising at least one selected from a polyvinyl ether as a base oil, wherein a carbon/oxygen molar ratio of the base oil is 2.5 or more and 5.8 or less, and wherein the polyvinyl ether has a carbon/oxygen molar ratio of 4.0 or more and 5.0 or less and a weight average molecular weight of 200 or more and 3000 or less,
wherein Formula (A) is as follows:

C₂HₙF₆₋ₙ (A)

wherein n represents 1 or 2,
wherein the polyvinyl ether is a polyvinyl ether having a structural unit represented by the following formula (1): 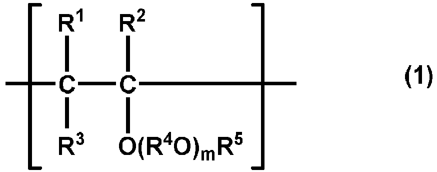
wherein R¹, R² and R³ each represent a hydrogen atom, m is 0, R⁵ represents an alkyl group having 1 to 5 carbon atoms, and
wherein the polyvinyl ether is a copolymer including:
   a structural unit (1-1) represented by the above formula (1), wherein R⁵ represents an ethyl group, and
   a structural unit (1-2) represented by the above formula (1), wherein R⁵ represents an isobutyl group, and
   wherein a molar ratio of the structural unit (1-1) to the structural unit (1-2) is 70 : 30 to 90 : 10

It is preferable that the refrigerant comprise 5 to 40 parts by mass of the hydrofluoroethane, 20 to 60 parts by mass of difluoromethane and 20 to 70 parts by mass of tetrafluoropropene based on 100 parts by mass of the refrigerant.

It is preferable that a mass ratio of the refrigerant to the refrigerating machine oil be 90 : 10 to 30 : 70.

It is preferable that the hydrofluoroethane be 1,1,1,2-tetrafluoroethane and that a global warming potential of the refrigerant be 500 or less.

### Advantageous Effects of Invention

The present invention can provide a working fluid composition for a refrigerating machine that can achieve compatibility and thermal/chemical stability in a refrigeration system using a refrigerant which contains a hydrofluoroethane, difluoromethane and an unsaturated hydrofluorocarbon without requiring for a significant modification of an existing system.

### Description of Embodiments

Hereinafter, a preferable embodiment of the present invention is described in detail.

A working fluid composition for a refrigerating machine according to an embodiment of the present invention comprises
a refrigerant comprising a hydrofluoroethane represented by the following formula (A), difluoromethane and tetrafluoropropene, and
a refrigerating machine oil comprising at least one selected from a polyvinyl ether as a base oil, wherein a carbon/oxygen molar ratio of the base oil is 2.5 or more and 5.8 or less, and wherein the polyvinyl ether has a carbon/oxygen molar ratio of 4.0 or more and 5.0 or less and a weight average molecular weight of 200 or more and 3000 or less,
wherein Formula (A) is as follows:

C₂HₙF₆₋ₙ (A)

wherein n represents 1 or 2,
wherein the polyvinyl ether is a polyvinyl ether having a structural unit represented by the following formula (1): 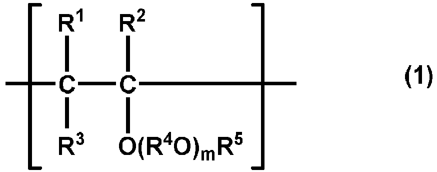
wherein R¹, R² and R³ each represent a hydrogen atom, m is 0, R⁵ represents an alkyl group having 1 to 5 carbon atoms, and
wherein the polyvinyl ether is a copolymer including:
   a structural unit (1-1) represented by the above formula (1), wherein R⁵ represents an ethyl group, and
   a structural unit (1-2) represented by the above formula (1), wherein R⁵ represents an isobutyl group, and
   wherein a molar ratio of the structural unit (1-1) to the structural unit (1-2) is 70 : 30 to 90 : 10.

In the working fluid composition for a refrigerating machine according to the present embodiment, the proportions of the refrigerant and the refrigerating machine oil blended are not particularly limited, but the mass ratio of the refrigerant to the refrigerating machine oil is preferably 90 : 10 to 30 : 70 and more preferably 80 : 20 to 40 : 60.

Then, the components contained in the working fluid composition for a refrigerating machine are described in detail.

### [Refrigerant]

The refrigerant in the present embodiment contains the hydrofluoroethane represented by the above formula (A), difluoromethane and tetrafluoropropene.

Herein, the hydrofluoroethane represented by the above formula (A) is non-flammable. Thus, as the ratio thereof blended is higher, the flammability is lower but the global warming potential is higher. While no test method for evaluating the boundary between "non-flammable" and "low flammable" is established and is studied internationally, the non-flammability of the mixed refrigerant is increased as the proportion of a non-flammable compound is increased.

Difluoromethane (R32), whose pressure is high, increases the efficiency of the refrigerating machine when the ratio thereof blended is high. But the GWP is increased and also the compatibility of the refrigerant with the refrigerating machine oil is deteriorated, when the ratio thereof blended is high.

On the other hand, tetrafluoropropene, whose global warming potential is extremely low, is thus environmentally-friendly when the ratio thereof blended is high. But it is poor in stability, and thus the stability of the working fluid is deteriorated when the ratio thereof blended is high.

Then, in the present embodiment, the hydrofluoroethane represented by the above formula (A), difluoromethane and tetrafluoropropene are mixed, and the resulting mixed refrigerant can be used as a suitable refrigerant, in which disadvantages of the each refrigerants are compensated and advantages thereof are utilized.

As the hydrofluoroethane represented by the above formula (A), 1,1,1,2-tetrafluoroethane (HFC-134a) or pentafluoroethane (HFC-125) is preferable in terms of thermodynamics characteristics. Furthermore, when the global warming potentials thereof are compared, that of HFC-125 is 3400 while that of HFC-134a is 1300, and thus HFC-134a having a lower GWP is more preferable. The hydrofluoroethane represented by the formula (A) may be used singly or in combination of two or more.

Tetrafluoropropenes include 2,3,3,3-tetrafluoropropene (HFO-1234yf), 1,3,3,3-tetrafluoropropene (HFO-1234ze), and 1,2,3,3-tetrafluoropropene (HFO-1234ye). Among them, HFO-1234yf and HFO-1234ze are preferable, and in particular HFO-1234yf is preferable in terms of physical properties of the refrigerant. Tetrafluoropropenes may be used singly or in combination of two or more thereof.

The content of each of the refrigerants in the above refrigerant based on 100 parts by mass of the refrigerant is preferably as follows: the content of the hydrofluoroethane represented by the above formula (A) is 5 to 40 parts by mass, the content of difluoromethane is 20 to 60 parts by mass, and the content of tetrafluoropropene is 20 to 70 parts by mass; and more preferably as follows; the content of the hydrofluoroethane represented by the above formula (A) is 10 to 30 parts by mass, the content of difluoromethane is 20 to 60 parts by mass, and the content of tetrafluoropropene is 20 to 70 parts by mass. Herein, difluoromethane is a high-pressure gas, and therefore when the content thereof is high, the efficiency of the refrigerating machine is increased. But when the content thereof is high, the GWP is increased, and also the compatibility between the refrigerant and the refrigerating machine oil is deteriorated. On the other hand, tetrafluoropropene, whose GWP is low, contributes environmental-friendliness when the content thereof is high. But it is poor in stability and thus the stability of the working fluid is deteriorated when the content thereof is high.

The global warming potential of the refrigerant (mixed refrigerant) in the present embodiment is preferably 500 or less and more preferably 300 or less. Herein, the global warming potential can also be reduced by mixing only difluoromethane and tetrafluoropropene without using the hydrofluoroethane, but in such a case, the content of tetrafluoropropene whose pressure is low is high. As a result, the efficiency of the refrigerating machine cannot be increased and the stability is also poor.

While the refrigerant in the present embodiment can further contain a component other than the above three components, the sum of the hydrofluoroethane represented by the above formula (A), difluoromethane and tetrafluoropropene is preferably 80% by mass or more and more preferably 90% by mass or more based on the total amount of the refrigerant.

The component other than the above three components includes a hydrofluorocarbon (HFC) refrigerant other than the hydrofluoroethane represented by the above formula (A), and a fluorine-containing ether-based refrigerant such as perfluoroethers.

In addition, the refrigerant in the present embodiment can further contain unsaturated hydrofluorocarbons other than tetrafluoropropenes. As such unsaturated hydrofluorocarbons, fluoropropenes containing 3 or 5 fluorine atoms are preferable, and any one of 1,2,3,3,3-pentafluoropropene (HFO-1225ye) and 3,3,3-trifluoropropene (HFO-1243zf) or a mixture of two or more of thereof is preferable. From the viewpoint of physical properties of the refrigerant, HFO-1225ye is preferable.

### [Refrigerating machine oil]

The refrigerating machine oil in the present embodiment contains at least one selected from a polyvinyl ether as a base oil, and the carbon/oxygen molar ratio of the base oil is 2.5 or more and 5.8 or less. Carbon and oxygen in the base oil can be quantitatively analyzed by a common elemental analysis method. While a carbon analysis includes a thermal conductivity method after conversion into carbon dioxide by burning, and a gas chromatography method, an oxygen analysis is commonly a carbon reduction method in which carbon monoxide derived by carbon is quantitatively analyzed, and a Shutze-Unterzaucher method is widely put into practical use.

In the case where the base oil is a mixed base oil including two or more components, the carbon/oxygen molar ratio of each of the components included in the mixed base oil is not particularly limited as long as the carbon/oxygen molar ratio of the mixed base oil is 2.5 or more and 5.8 or less. These preferable examples are described later.

### [Polyvinyl ether]

The carbon/oxygen molar ratio of the polyvinyl ether is 2.5 or more and 5.8 or less, preferably 3.2 or more and 5.8 or less, and further preferably 4.0 or more and 5.0 or less. If the carbon/oxygen molar ratio is less than this range, hygroscopicity is higher, and if the ratio is more than this range, compatibility is deteriorated. In addition, the weight average molecular weight of the polyvinyl ether is 200 or more and 3000 or less and preferably 500 or more and 1500 or less.

The polyvinyl ether used in the present embodiment has a structural unit represented by the following formula (1). 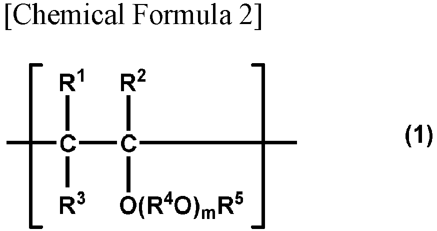 [R¹, R² and R³ each represent a hydrogen atom, R⁵ represents a hydrocarbon group having 1 to 5 carbon atoms, and m is 0.

The polyvinyl ether in the present embodiment is a copolymer constituted by 2 or more type of the structural units, and brings about the effect of further enhancing lubricity, insulation property, hygroscopicity, while satisfying compatibility. Accordingly, the following effect is exerted: an oil agent can be obtained at will according to requirements such as lubricity and compatibility that vary depending on the type of a compressor in a refrigeration system or an air-conditioning system, the material of a lubrication portion, refrigeration ability, the type of a refrigerant, and the like. The copolymer may be any of a block copolymer and a random copolymer.

The copolymer includes a structural unit (1-1) represented by the above formula (1) wherein R⁵ represents an ethyl group, and a structural unit (1-2) represented by the above formula (1) wherein R⁵ represents an isobutyl group. Furthermore, the molar ratio of the structural unit (1-1) to the structural unit (1-2) is 70 : 30 to 90 : 10. In the case where the molar ratio departs from the above range, there is a tendency toward insufficient compatibility with the refrigerant and higher hygroscopicity.

The polyvinyl ether in the present embodiment may be one constituted by only the structural unit represented by the above formula (1), but may be a copolymer further including a structural unit represented by the following formula (2). In this case, the copolymer may be any of a block copolymer and a random copolymer. 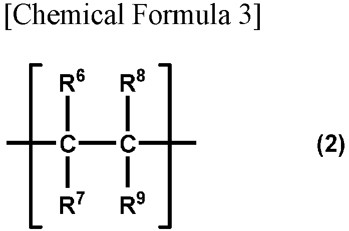 [R⁶ to R⁹ may be the same as or different from one another and each represent a hydrogen atom or a hydrocarbon group having 1 to 20 carbon atoms.]

### [End structure of polyvinyl ether]

The polyvinyl ether in the present embodiment can be produced by polymerization of each corresponding vinyl ether-based monomer, and copolymerization of a corresponding hydrocarbon monomer having an olefinic double bond with a corresponding vinyl ether-based monomer. As the vinyl ether-based monomer corresponding to the structural unit represented by the formula (1), a monomer represented by the following formula (3) is suitable. 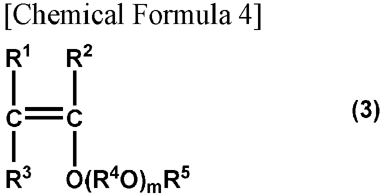 [R¹, R², R³, R⁴, R⁵ and m represent the same meaning as in R¹, R², R³, R⁴, R⁵ and m in the formula (1), respectively.]

As the polyvinyl ether in the present embodiment, ethers having the following end structures are suitable.
(A) Those having a structure in which one end is represented by formula (4) and other end is represented by formula (6). 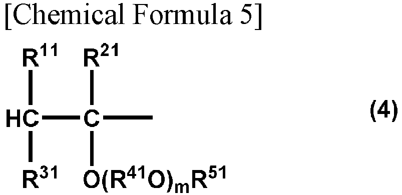 [R¹¹, R²¹ and R³¹ each represent a hydrogen atom, R⁵¹ represents a hydrocarbon group having 1 to 5 carbon atoms, m represents is 0. 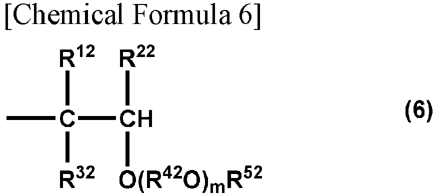 [R¹², R²² and R³² each represent a hydrogen atom, R⁵² represents a hydrocarbon group having 1 to 5 carbon atoms, m is 0.

### [Production of polyvinyl ether]

The polyvinyl ether in the present embodiment can be produced by subjecting the above monomer to radical polymerization, cation polymerization, radiation polymerization, or the like. After completion of the polymerization reaction, a usual separation/purification method is if necessary conducted, and thus the intended polyvinyl ether-based compound having the structural unit represented by the formula (1) is obtained.

As described above, it is required for the polyvinyl ether in the present embodiment that the carbon/oxygen molar ratio is in the predetermined range, and the carbon/oxygen molar ratio of a raw material monomer can be regulated to thereby produce a polymer whose molar ratio is in the above range. That is, when the rate of a monomer whose carbon/oxygen molar ratio is high is high, a polymer whose carbon/oxygen molar ratio is high is obtained, and when the rate of a monomer whose carbon/oxygen molar ratio is low is high, a polymer whose carbon/oxygen molar ratio is low is obtained. Herein, in the case where a vinyl ether-based monomer and a hydrocarbon monomer having an olefinic double bond are copolymerized, a polymer whose carbon/oxygen molar ratio is higher than the carbon/oxygen molar ratio of the vinyl ether-based monomer is obtained, but the proportion thereof can be regulated by the rate and the number of carbon atoms of the hydrocarbon monomer having an olefinic double bond to be used.

In addition, in a production step of the polyvinyl ether represented by the above formula (1), a side reaction may be caused and thus an unsaturated group such as an aryl group may be formed in the molecule. If the unsaturated group is formed in the polyvinyl ether molecule, the following phenomenon easily occurs: the thermal stability of the polyvinyl ether itself is deteriorated, a polymerized produce is generated to generate sludge, or antioxidative property (oxidation preventing property) is deteriorated to generate peroxide. In particular, if peroxide is generated, it is decomposed to generate a compound having a carbonyl group, and the compound having a carbonyl group further generates sludge to easily cause blockage of a capillary. Therefore, as the polyvinyl ether according to the present embodiment, those in which the degree of unsaturation due to an unsaturated group and the like is low is preferable, and specifically, the degree of unsaturation is preferably 0.04 meq/g or less, more preferably 0.03 meq/g or less, and most preferably 0.02 meq/g or less. In addition, the peroxide value is preferably 10.0 meq/kg or less, more preferably 5.0 meq/kg or less, and most preferably 1.0 meq/kg. Furthermore, the carbonyl value is preferably 100 ppm by weight or less, more preferably 50 ppm by weight or less, and most preferably 20 ppm by weight or less.

Herein, the degree of unsaturation, the peroxide value and the carbonyl value in the present invention are each the value measured by the Standard Methods for the Analysis of Fats, Oils and Related Materials, established by the Japan Oil Chemists' Society. That is, the degree of unsaturation in the present invention is the value (meq/g) obtained by reacting a Wijs solution (ICl-acetic acid solution) with a sample, leaving the resultant to stand in a dark area, thereafter reducing the excess ICl to iodine, titrating the iodine content with sodium thiosulfate to calculate the iodine value, and converting the iodine value to the vinyl equivalent; the peroxide value in the present invention is the value (meq/kg) obtained by adding potassium iodide to a sample, titrating the free iodine generated with sodium thiosulfate, and converting the free iodine to the number of milliequivalents with respect to 1 kg of the sample; and the carbonyl value in the present invention is the value (ppm by weight) obtained by allowing 2,4-dinitrophenylhydrazine to act on a sample to yield a colorable quinoid ion, measuring the absorbance of the sample at 480 nm, and converting the absorbance to the carbonyl content based on a predetermined calibration curve with cinnamaldehyde as the standard substance. The hydroxyl value is not particularly limited, but it is desirable that the hydroxyl value be 10 mgKOH/g, preferably 5 mgKOH/g and further preferably 3 mgKOH/g.

The content of the polyvinyl ether in the refrigerating machine oil is preferably 80% by mass or more and particularly preferably 90% by mass or more in total based on the total amount of the refrigerating machine oil in order that the refrigerating machine oil is excellent in characteristics demanded, such as lubricity, compatibility, thermal/chemical stability, and electrical insulation property. As the base oil, a mineral oil, a hydrocarbon-based oil such as an olefin polymer, a naphthalene compound and alkylbenzenes, and an oxygen-containing synthetic oil such as carbonates, ketones, polyphenyl ethers, silicones, polysiloxanes and perfluoroethers can be used in combination but the polyol ester, the polyvinyl ether and the polyalkylene glycol compound described later,. As the oxygen-containing synthetic oil, among them, carbonates or ketones are preferably used.

The kinematic viscosity of the refrigerating machine oil is not particularly limited, but the kinematic viscosity at 40°C can be preferably set to 3 to 1000 mm²/s, more preferably 4 to 500 mm²/s, and most preferably 5 to 400 mm²/s. In addition, the kinematic viscosity at 100°C can be preferably set to 1 to 100 mm²/s and more preferably 2 to 50 mm²/s.

The volume resistivity of the refrigerating machine oil is not particularly limited, but it can be preferably set to 1.0 × 10⁹ Ω·m or more, more preferably 1.0 × 10¹⁰ Ω·m or more, and most preferably 1.0 × 10¹¹ Ω·m or more. In particular, in the case where the refrigerating machine oil is used for a closed type refrigerating machine, a high electrical insulation property tends to be required. In the present invention, the volume resistivity means the value at 25°C measured according to JIS C 2101 "Electrical Insulation Oil Test Method".

The moisture content in the refrigerating machine oil is not particularly limited, but it can be preferably set to 200 ppm or less, more preferably 100 ppm or less, and most preferably 50 ppm or less based on the total amount of the refrigerating machine oil. In particular, in the case where the refrigerating machine oil is used for a closed type refrigerating machine, the moisture content is demanded to be low from the viewpoint of the influence on thermal/chemical stability and the electrical insulation property of the refrigerating machine oil.

The acid value of the refrigerating machine oil is not particularly limited, but it can be preferably set to 0.1 mgKOH/g or less and more preferably 0.05 mgKOH/g or less in order to prevent corrosion of a metal used for a refrigerating machine or a pipe, and to prevent decomposition of the ester contained in the refrigerating machine oil according to the present embodiment. In the present invention, the acid value means the acid value measured according to JIS K2501 "Petroleum Products And Lubricating Oils-Neutralization Value Test Method".

The ash content of the refrigerating machine oil is not particularly limited, but it can be preferably set to 100 ppm or less and more preferably 50 ppm or less in order to increase the thermal/chemical stability of the refrigerating machine oil according to the present embodiment and to suppress the occurrence of sludge or the like. In the present invention, the ash content means the value of the ash content measured according to JIS K2272 "Crude Oil/Petroleum Product Ash Content and Sulfated Ash Content Test Method".

The working fluid composition for a refrigerating machine according to the present embodiment can also be used in the form of being blended with various additives, if necessary. While the content of the additives is shown based on the total amount of a refrigerating machine oil composition, the content of these components in the fluid composition for a refrigerating machine is preferably 5% by mass or less and particularly preferably 2% by mass or less based on the total amount of a refrigerating machine oil composition.

In order to further improve the wear resistance and the load resistance of the working fluid composition for a refrigerating machine according to the present embodiment, it is possible to blend at least one phosphorus compound selected from the group consisting of phosphates, acidic phosphates, thiophosphates, amine salts of acidic phosphates, chlorinated phosphates, and phosphites. These phosphorus compounds are esters of phosphoric acid or phosphorous acid and an alkanol or a polyether type alcohol, or derivatives thereof.

In addition, the working fluid composition for a refrigerating machine according to the present embodiment can contain at least one epoxy compound selected from a phenylglycidylether type epoxy compound, an alkylglycidylether type epoxy compound, a glycidylester type epoxy compound, an allyloxysilane compound, an alkyloxysilane compound, an alicyclic epoxy compound, an epoxidated fatty acid monoester and an epoxidated vegetable oil in order to further improve the thermal/chemical stability thereof.

In addition, the working fluid composition for a refrigerating machine according to the present embodiment can if necessary contain conventionally known additives for a refrigerating machine oil in order to further enhance the performances thereof. Examples of such additives includes a phenol-based antioxidant such as di-tert-butyl-p-cresol and bisphenol A, an amine-based antioxidant such as phenyl-α-naphthylamine and N,N-di(2-naphthyl)-p-phenylenediamine, a wear inhibitor such as zinc dithiophosphate, an extreme pressure agent such as chlorinated paraffins and a sulfur compound, an oiliness agent such as fatty acids, a defoaming agent such as silicones, a metal deactivator such as benzotriazole, a viscosity index improver, a pour point depressant, and a detergent dispersant. These additives may be used singly or in combination of two or more.

The working fluid composition for a refrigerating machine according to the present embodiment is preferably used for a room air-conditioner and a cold storage chamber having a closed type reciprocating or rotating compressor, or an open-type or closed type car air-conditioner. In addition, the working fluid composition for a refrigerating machine and the refrigerating machine oil according to the present embodiment are preferably used for a cooling apparatus or the like of a dehumidifier, a water heater, a refrigerator, a refrigeration and cooling warehouse, a vending machine, a showcase, a chemical plant, or the like. Furthermore, the working fluid composition for a refrigerating machine and the refrigerating machine oil according to the present embodiment are also preferably used for one having a centrifugal compressor.

### Examples

Hereinafter, the present invention is more specifically described based on Examples and Comparative Examples, but the present invention is not limited to the following Examples at all.

### [Refrigerating machine oil]

First, 0.1% by mass of di-ter.-butyl-p-cresol (DBPC) as an antioxidant was added to each of base oils 1 to 5 shown below to prepare each of refrigerating machine oils 1 to 5. Various properties of refrigerating machine oils 1 to 5 are shown in Table 1.

### [Base oil]

Base oil 1: ester of mixed fatty acid of 2-ethylhexanoic acid and 3,5,5-trimethylhexanoic acid (mixing ratio (molar ratio): 50/50) with pentaerythritol. Carbon/oxygen molar ratio: 4.8

Base oil 2: ester of mixed fatty acid of n-pentanoic acid, n-heptanoic acid and 3,5,5-trimethylhexanoic acid (mixing ratio (molar ratio): 40/40/20) with pentaerythritol. Carbon/oxygen molar ratio: 3.3

Base oil 3: ester of oleic acid and trimethylolpropane. Carbon/oxygen molar ratio: 9.8

Base oil 4: copolymer of ethyl vinyl ether and isobutyl vinyl ether (ethyl vinyl ether/isobutyl vinyl ether = 7/1 (molar ratio)). Weight average molecular weight: 910; carbon/oxygen molar ratio: 4.3

Base oil 5: compound in which both ends of polypropylene glycol were methyl-etherified. Weight average molecular weight: 1100; carbon/oxygen molar ratio: 2.9

Base oil 6: compound being copolymer of polyoxyethylene glycol and polyoxypropylene glycol, wherein one end was methyl-etherified. Weight average molecular weight: 1700; carbon/oxygen molar ratio: 2.7

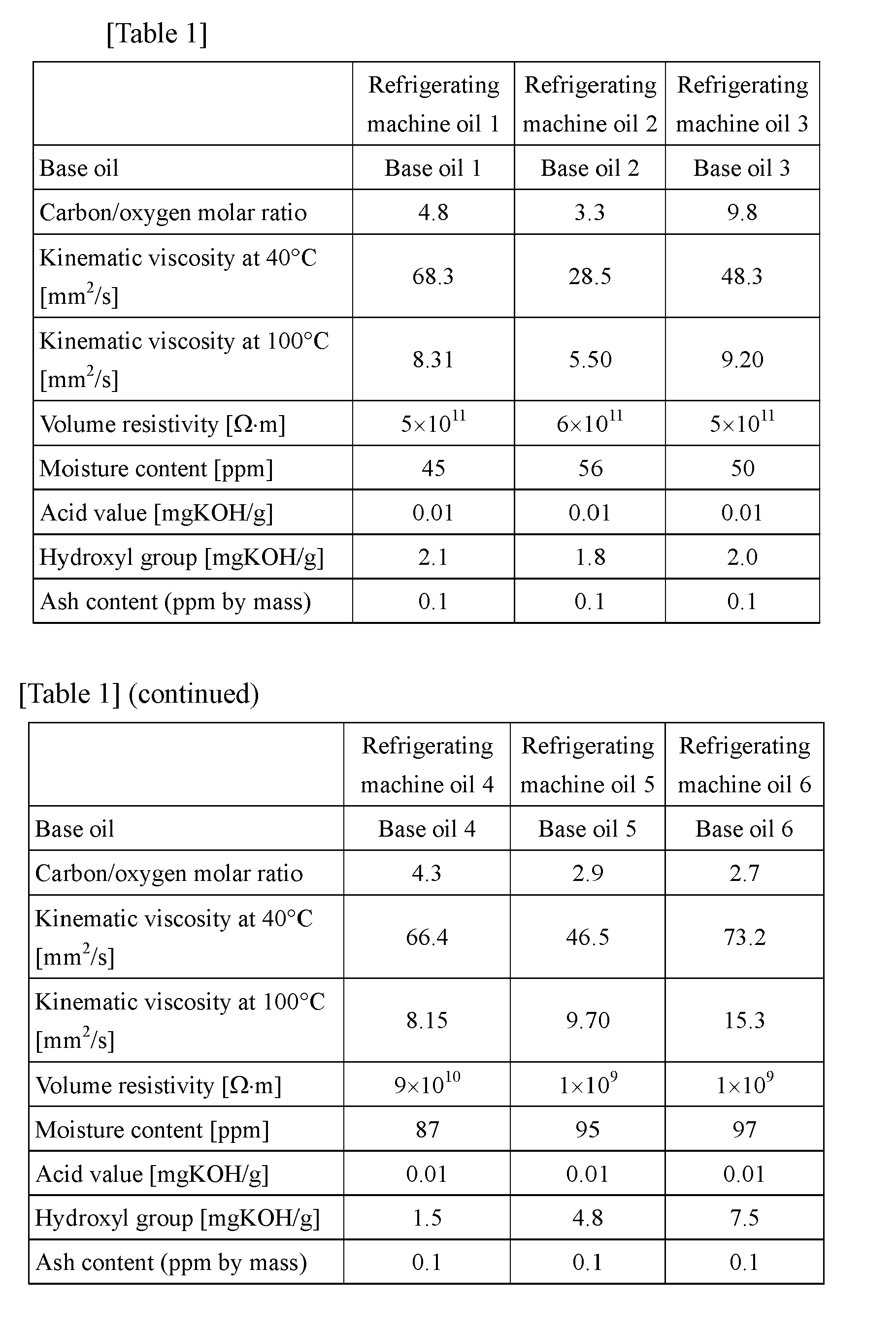

### [Examples 1 to 8 and Comparative Examples 1 to 12]

In each of Illustrating Examples 1 to 4, 7 and 8, Examples 5 and 6 and Comparative Examples 1 to 12, with respect to each working fluid composition for a refrigerating machine in which each of refrigerating machine oils 1 to 6 was combined with each refrigerant shown in Tables 2 to 4, evaluation tests shown below were performed. As described later, the mass ratio of the refrigerant to the refrigerating machine oil in the working fluid composition for a refrigerating machine was changed with respect to each test.

As the refrigerant, the followings were used. Mixed refrigerant A was set in favor of refrigerant characteristics for the increase in efficiency, and the GWP thereof was 500 or less, specifically 487. Mixed refrigerant B was set for a further reduction in GWP, and the GWP thereof was 300 or less, specifically 288. Herein, HFC-134a, whose GWP was as high as 1300, was currently used widely as a refrigerant, and therefore used for comparison.

### [Refrigerant]

Mixed refrigerant A: HFC-134a/HFC-32/HFO-1234yf = 15/43/42 (mass ratio, GWP: 487)
Mixed refrigerant B: HFC-134a/HFC-32/HFO-1234yf = 10/23/67 (mass ratio, GWP: 288)
HFC-32: difluoromethane (GWP: 675)
HFO-1234yf: 2,3,3,3-tetrafluoropropene (GWP: 4)
HFC-134a: 1,1,1,2-tetrafluoroethane (GWP: 1300)

Then, with respect to each of the working fluid compositions for a refrigerating machine in Examples 1 to 8 and Comparative Examples 1 to 12, evaluation tests shown below were performed. The results are shown in Tables 2 to 4.

### [Evaluation of compatibility]

According to JIS-K-2211, "Test Method of Compatibility of Refrigerating machine Oil with Refrigerant", 2 g of each refrigerating machine oil was blended with 18 g of each of the above refrigerants including the mixed refrigerants, and whether the refrigerant and the refrigerating machine oil were dissolved in each other at 0°C or not was observed. The results obtained are shown in Tables 2 to 4. In Tables, "Compatible" means that the refrigerant and the refrigerating machine oil were dissolved in each other and "Separated" means that the refrigerant and the refrigerating machine oil were separated to two layers.

### [Evaluation of thermal/chemical stability]

According to JIS-K-2211, 1 g of a refrigerating machine oil (initial ASTM color L: 0.5) in which the moisture content was adjusted to 100 ppm or less, 1 g of each of various refrigerants described above, and a catalyst (wire of each of iron, copper and aluminum) were enclosed into a glass tube, and then the resultant was placed in a protective tube made of iron, and heated to 175°C and kept therein for one week. After the test, the ASTM color of the refrigerating machine oil and the change in color of the catalyst color were evaluated. The ASTM color was evaluated according to ASTM D156. In addition, the change in color of the catalyst was evaluated by visually observing the appearance for rating as no change, no gloss, or blackened. In the case of no gloss or blackened, the mixed liquid of the refrigerating machine oil and the refrigerant, namely, a working fluid can be said to be deteriorated. The results obtained are shown in Tables 2 to 4.

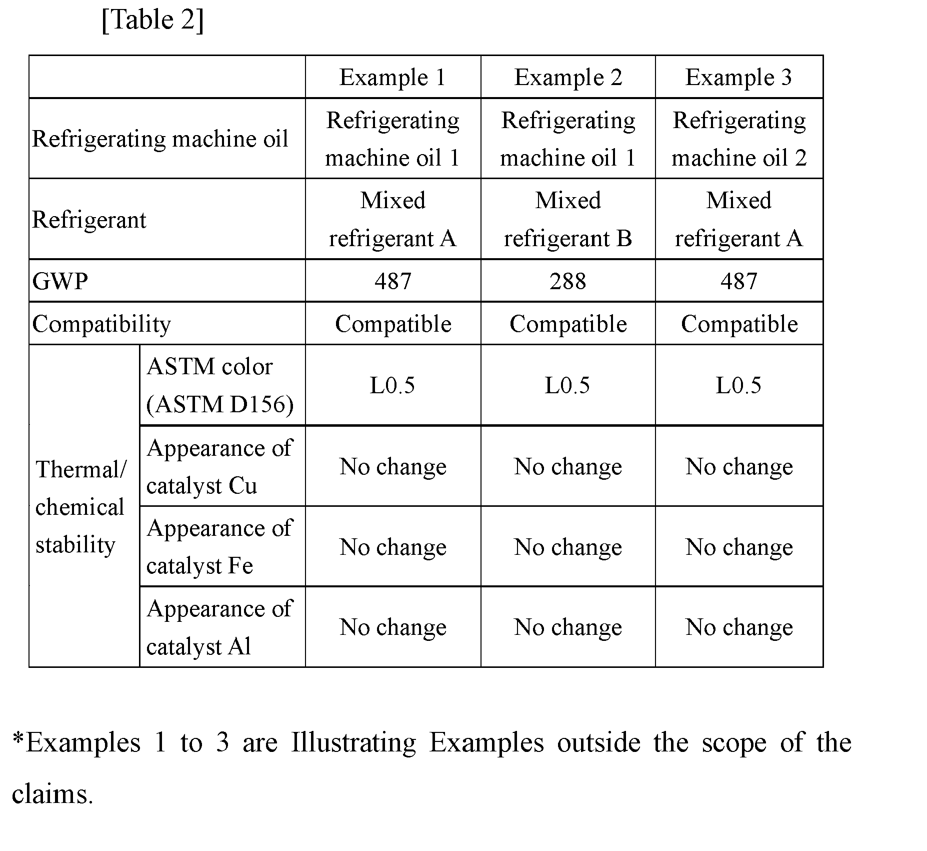

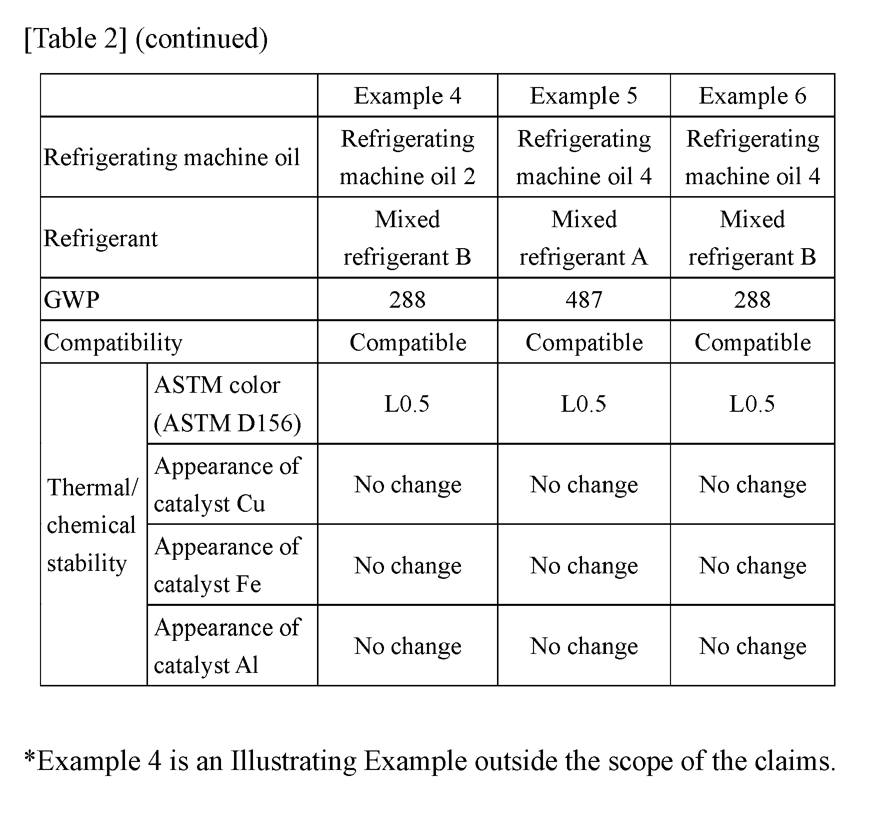

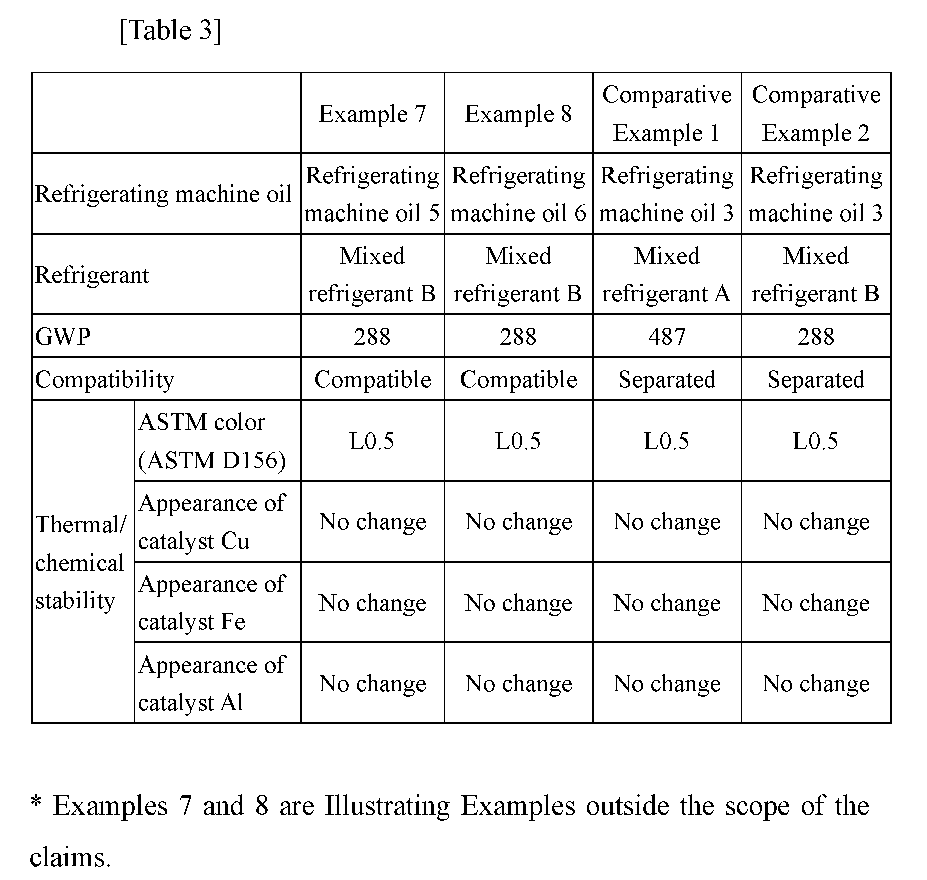

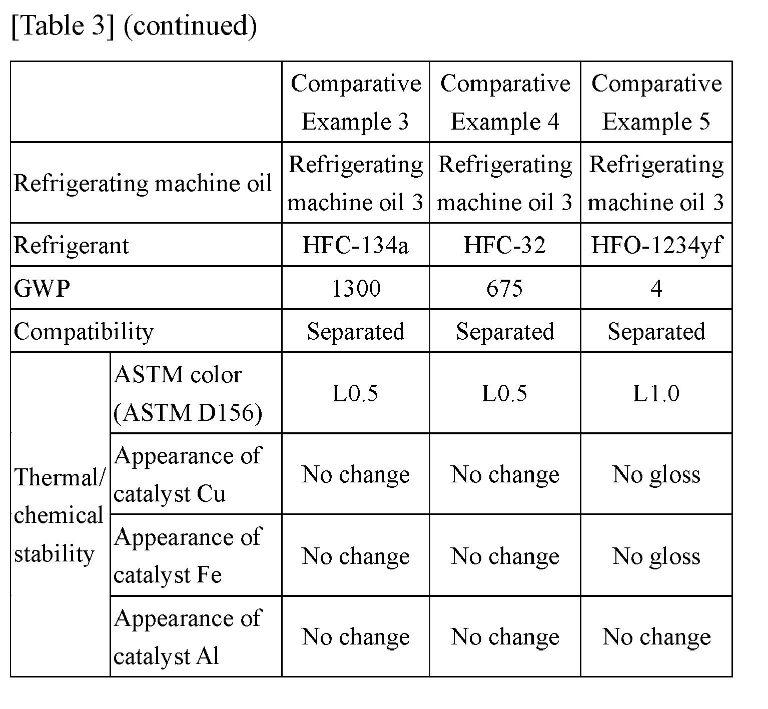

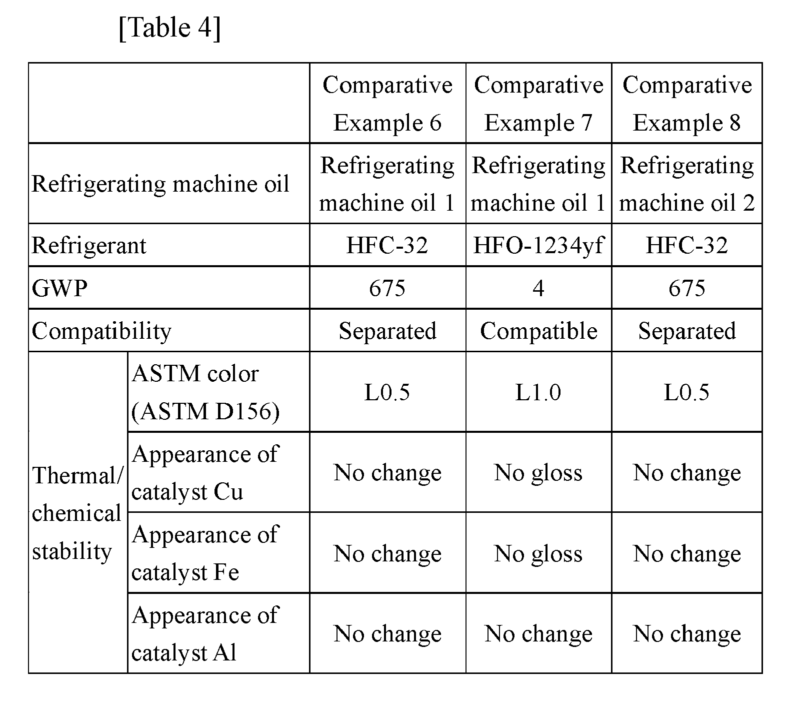

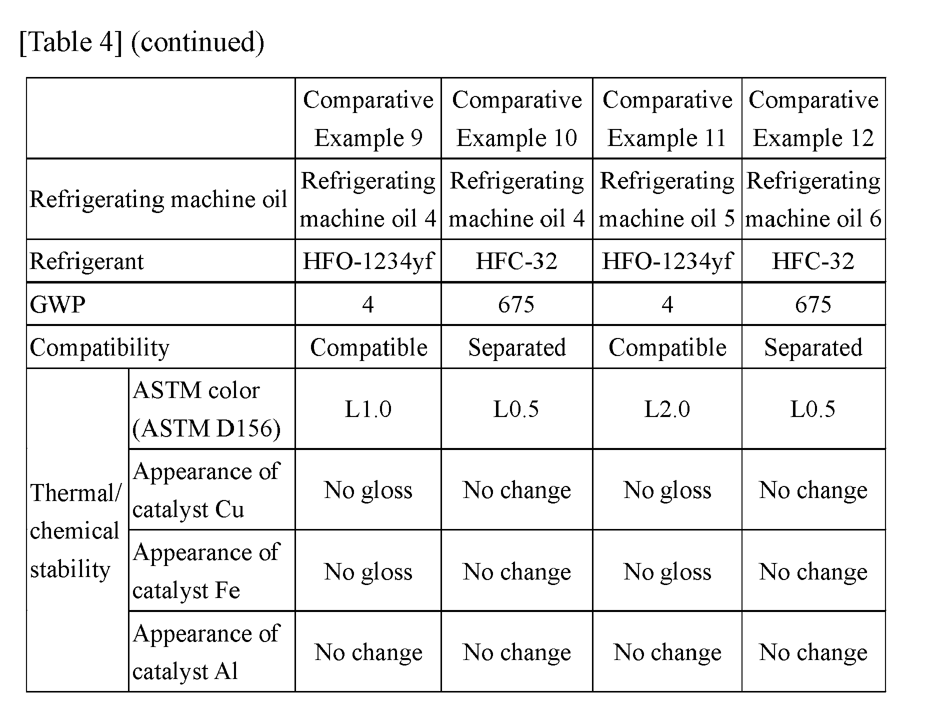

### Industrial Applicability

The present invention provides a working fluid composition for use in a refrigerating machine which contains a refrigerant having a low GWP and containing a specific hydrofluoroethane, difluoromethane and tetrafluoropropene, and the composition can be safely used as a working fluid in a high-cooling efficiency refrigeration system having a compressor, a condenser, a throttle device, an evaporator, and the like among which the refrigerant is circulated, in particular, in a refrigerating machine having a compressor such as a rotary-type, swing-type, or scrolling-type compressor, and can be suitably used in the fields of a room air-conditioner, an all-in-one air conditioner, a coolerator, a car air-conditioner, an industrial refrigerating machine, and the like, in which lower flammability is demanded.

## Claims

1. A working fluid composition for a refrigerating machine, comprising:
a refrigerant comprising a hydrofluoroethane represented by the following formula (A),
difluoromethane and tetrafluoropropene; and
a refrigerating machine oil comprising at least one selected from a polyvinyl ether as a base oil, wherein a carbon/oxygen molar ratio of the base oil is 2.5 or more and 5.8 or less, and
wherein the polyvinyl ether has a carbon/oxygen molar ratio of 4.0 or more and 5.0 or less and
a weight average molecular weight of 200 or more and 3000 or less,
wherein Formula (A) is as follows:
C₂HₙF₆₋ₙ (A)
wherein n represents 1 or 2,
wherein the polyvinyl ether is a polyvinyl ether having a structural unit represented by the following formula (1): 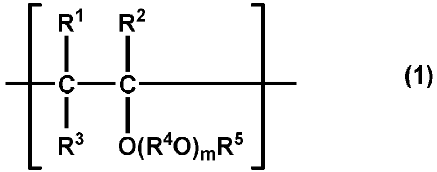
wherein R¹, R² and R³ each represent a hydrogen atom, m is 0, R⁵ represents an alkyl group having 1 to 5 carbon atoms, and
wherein the polyvinyl ether is a copolymer including:
a structural unit (1-1) represented by the above formula (1), wherein R⁵ represents an ethyl group, and
a structural unit (1-2) represented by the above formula (1), wherein R⁵ represents an isobutyl group, and
wherein a molar ratio of the structural unit (1-1) to the structural unit (1-2) is 70 : 30 to 90 : 10.

2. The working fluid composition for a refrigerating machine according to claim 1, wherein the refrigerant comprises 5 to 40 parts by mass of the hydrofluoroethane, 20 to 60 parts by mass of difluoromethane and 20 to 70 parts by mass of tetrafluoropropene based on 100 parts by mass of the refrigerant.

3. The working fluid composition for a refrigerating machine according to claim 1 or 2, wherein a mass ratio of the refrigerant to the refrigerating machine oil is 90 : 10 to 30 : 70.

4. The working fluid composition for a refrigerating machine according to any one of claims 1 to 3, wherein the hydrofluoroethane is 1,1,1,2-tetrafluoroethane.

## Patentansprüche

1. Arbeitsfluidzusammensetzung für eine Kälteanlage, mit:
einem Kältemittel mit Hydrofluorethan, das durch die folgende Formel (A) dargestellt ist, mit Difluormethan und Tetrafluorpropen; und
einem Kälteanlagenöl mit mindestens einem, das aus einem Polyvinylether als Basisöl ausgewählt ist, wobei ein molares Kohlenstoff/Sauerstoffverhältnis des Basisöls 2,5 oder größer und 5,8 oder kleiner ist, und wobei der Polyvinylether ein molares Kohlenstoff/Sauerstoffverhältnis von 4,0 oder größer und 5,0 oder kleiner hat und ein auf das Gewicht bezogenes mittleres Molekulargewicht von 200 oder größer und 3000 oder kleiner hat,
wobei die Formel (A) wie folgt ist:
C₂HₙF₆₋ₙ (A)
wobei n gleich 1 oder 2 ist,
wobei der Polyvinylether ein Polyvinylether mit einer strukturellen Einheit ist, die durch die folgende Formel (1) dargestellt wird: 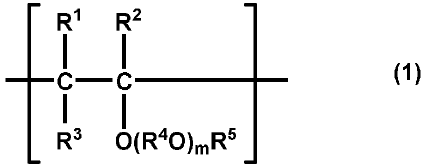
wobei R¹, R² und R³ jeweils ein Wasserstoffatom repräsentieren, m gleich 0 ist, R⁵ eine Alkylgruppe mit 1 bis 5 Kohlenstoffatome repräsentiert, und
wobei der Polyvinylether ein Copolymer ist, das enthält:
eine strukturelle Einheit (1-1), die durch die vorhergehende Formel (1) dargestellt wird, wobei R⁵ eine Ethylgruppe darstellt, und
eine strukturelle Einheit (1-2), die durch die vorhergehende Formel (1) dargestellt wird, wobei R⁵ eine Isobutylgruppe darstellt, und
wobei ein molares Verhältnis der strukturellen Einheit (1-1) zu der strukturellen Einheit (1-2) 70 : 30 bis 90 : 10 beträgt.

2. Arbeitsfluidzusammensetzung für eine Kälteanlage nach Anspruch 1, wobei das Kältemittel 5 bis 40 Teile des Hydrofluorethans, 20 bis 60 Teile von Difluormethan und 20 bis 70 Teile von Tetrafluorpropen, jeweils bezogen auf die Masse, basierend auf 100 Teilen des Kältemittels, bezogen auf die Masse, enthält.

3. Arbeitsfluidzusammensetzung für eine Kälteanlage nach Anspruch 1 oder 2, wobei ein Massenverhältnis des Kältemittels zu dem Kälteanlagenöl 90 : 10 bis 30 : 70 beträgt.

4. Arbeitsfluidzusammensetzung für eine Kälteanlage nach einem der Ansprüche 1 bis 3, wobei das Hydrofluorethan 1,1,1,2-Tetrafluorethan ist.

## Revendications

1. Composition de fluide de travail pour machine réfrigérante, comprenant :
un frigorigène comprenant un hydrofluoroéthane représenté par la formule (A) suivante, du difluorométhane et du tétrafluoropropène ; et
une huile pour machine réfrigérante comprenant au moins un composé choisi parmi un éther de polyvinyle en tant qu'huile de base, un rapport molaire carbone/oxygène de l'huile de base étant égal ou supérieur à 2,5 et égal ou inférieur à 5,8, et l'éther de polyvinyle ayant un rapport molaire carbone/oxygène égal ou supérieur à 4,0 et égal ou inférieur à 5,0 et une masse moléculaire moyenne en poids égale ou supérieure à 200 et égale ou inférieure à 3000,
la Formule (A) étant la suivante :
C₂HₙF₆₋ₙ (A)
où n représente 1 ou 2,
l'éther de polyvinyle étant un éther de polyvinyle ayant un motif structural représenté par la formule (1) suivante : 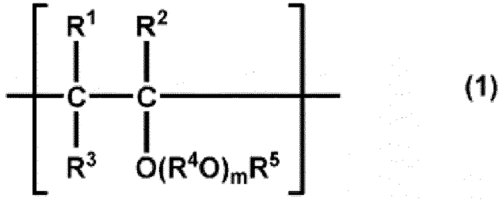 dans laquelle R¹, R² et R³ représentent chacun un atome d'hydrogène, m vaut 0, R⁵ représente un groupe alkyle ayant de 1 à 5 atomes de carbone, et
l'éther de polyvinyle étant un copolymère comprenant :
un motif structural (1-1) représenté par la formule (1) ci-dessus, dans laquelle R⁵ représente un groupe éthyle, et
un motif structural (1-2) représenté par la formule (1) ci-dessus, dans laquelle R⁵ représente un groupe isobutyle, et
un rapport molaire du motif structural (1-1) au motif structural (1-2) allant de 70:30 à 90:10.

2. Composition de fluide de travail pour machine réfrigérante selon la revendication 1, dans laquelle le frigorigène comprend de 5 à 40 parties en masse de l'hydrofluoroéthane, de 20 à 60 parties en masse de difluorométhane et de 20 à 70 parties en masse de tétrafluoropropène sur la base de 100 parties en masse du frigorigène.

3. Composition de fluide de travail pour machine réfrigérante selon la revendication 1 ou 2, dans laquelle un rapport massique du frigorigène à l'huile pour machine réfrigérante va de 90:10 à 30:70.

4. Composition de fluide de travail pour machine réfrigérante selon l'une quelconque des revendications 1 à 3, dans laquelle l'hydrofluoroéthane est le 1,1,1,2-tétrafluoroéthane.
